# EUROPÄISCHE PATENTSCHRIFT

(11) **EP 0 458 032 B1**
(45) Veröffentlichungstag und Bekanntmachung des Hinweises auf die Patenterteilung: **11.12.1996**
(21) Anmeldenummer: 91104388.3
(22) Anmeldetag: 21.03.1991
(51) Int. Cl.: A01D 41/12

(54) **Mähdrescherkorntank**
Combine harvester grain tank
Réservoir à grain pour moissonneuse-batteuse

(30) Priorität: 21.05.1990 DE 4016319
(43) Veröffentlichungstag der Anmeldung: 27.11.1991
(73) Patentinhaber: CLAAS Kommanditgesellschaft auf Aktien, 33428 Harsewinkel (DE)
(72) Erfinder: Dammann, Martin, W-4834 Harsewinkel (DE); Theissing, Gerhard, W-4834 Harsewinkel (DE)

(56) Entgegenhaltungen:
- EP-A- 0 098 327
- BE-A- 742 766
- DE-A- 1 482 855
- DE-A- 2 063 168
- DE-U- 1 966 426
- US-A- 4 106 649
- US-A- 4 466 549
- SOVIET INVENTIONS ILLUSTRATED Week 8602, 28. Januar 1986 Derwent Publications Ltd., London, GB; AN 86-012742 & SU-A-1 163 814 (PICHUNOV) 30. Juni 1985

## Beschreibung

Die Erfindung betrifft einen Mähdrescherkorntank mit Stirnwänden, Seitenwänden und einer oberen Befüllöffnung, die zumindest bereichsweise durch mit jeder Seitenwand klappbar verbundene Deckel verschließbar ist, wobei diesen beiden Deckeln mit den Korntankstirnwänden verbundene höhenverlagerbare Bleche derart zugeordnet sind, daß die Deckel in hochgeklappter Stellung gemeinsam mit den hochgestellten Blechen einen kastenförmigen Aufsatz zwecks Korntankvergrößerung bilden.

Ein derartiger Korntank ist beispielsweise aus der deutschen Gebrauchsmuster-Schrift 1966426 bekannt. Bei derartig ausgebildeten Korntanks war es bisher immer äußerst problematisch, die zusätzlichen Wände aufzustellen, weil dies manuell von einer Bedienungsperson verselbständigt werden mußte, die zu diesem Zweck auf den Mähdrescher klettern mußte. Der vorliegenden Erfindung liegt daher das Problem zugrunde, einen Mähdrescherkorntank der eingangs näher genannten Art so auszubilden, daß der Mähdrescherkorntank in seinem Volumen erweitert werden kann, ohne daß es erforderlich ist, auf den Mähdrescher klettern und eingreifen zu müssen. Dieses Problem wird erfindungsgemäß dadurch gelöst, daß die Bleche in an der Innenseite der Korntankstirnwände befestigte Geradführungen über ein Kraftmittel auf und ab verschiebbar geführt sind und daß die mit den Seitenwänden klappbar verbundenen Deckel von den Blechen verschwenkt werden.

Vorteilhafte Ausführungsformen der Erfindung sind in den Unteransprüchen näher definiert.

Im folgenden soll die Erfindung anhand eines Ausführungsbeispiels und mehrerer dieses schematisch darstellender Figuren näher erläutert werden.

Dabei zeigt:

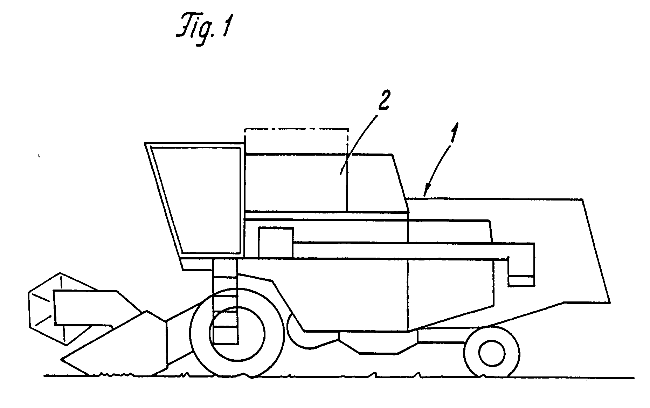

- Fig. 1: Einen selbstfahrenden Mähdrescher in der Seitenansicht,
- Fig. 2: den Korntank des in Fig. 1 dargestellten Mähdrescher in perspektivischer Darstellung als Durchdringungszeichnung,
- Fig. 3: den in Fig. 2 dargestellten Korntank im Schnitt nach der Linie III-III der Fig. 2,
- Fig. 4: den Korntankquerschnitt in der Draufsicht einschl. der Verstell- und Umlenkelemente,
- Fig. 5: einen Schnitt nach der Linie V-V.

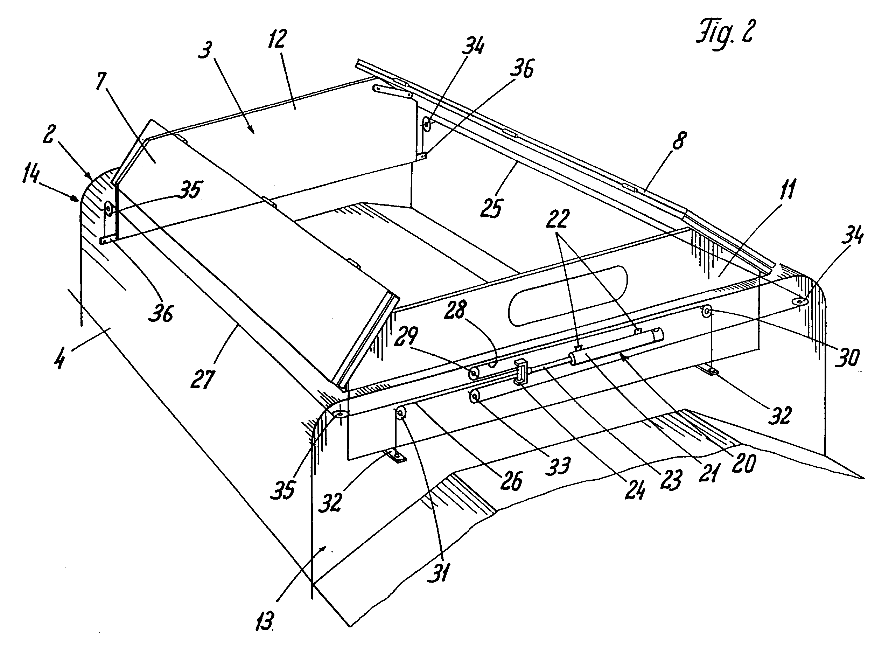

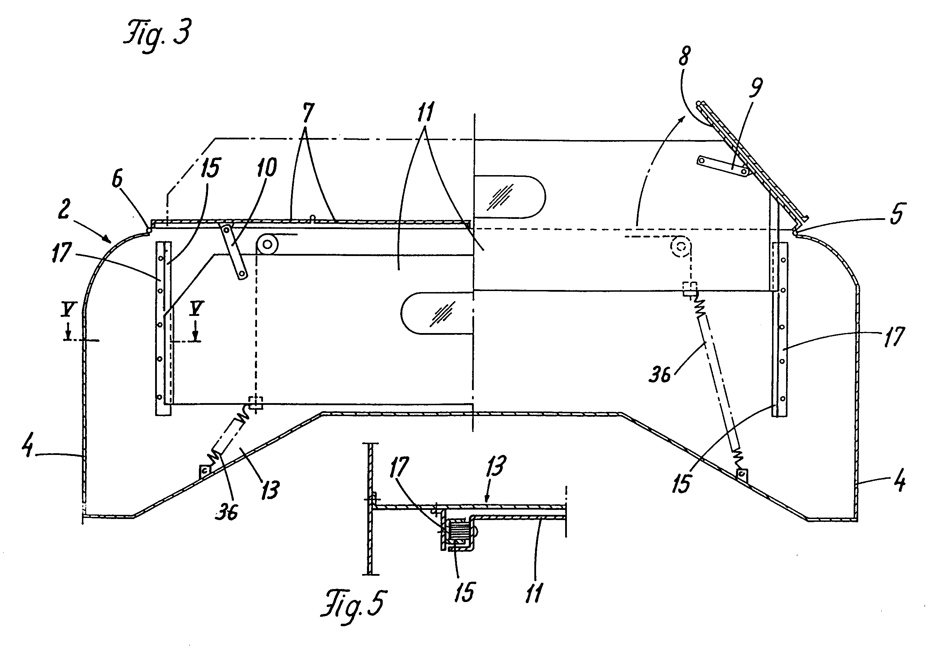

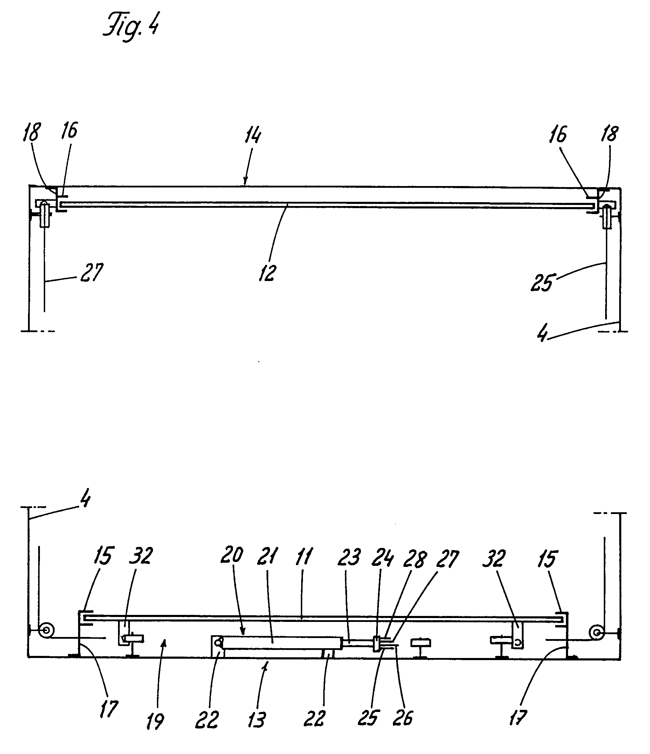

Mit 1 ist ein selbstfahrender Mähdrescher bezeichnet, der einen aufgesetzten mit einer Befüllöffnung 3 versehenen Korntank 2 aufweist. Mit den Seitenwänden 4 dieses Korntanks 2 sind über Scharniere 5 und 6 zwei zweigeteilte Deckel 7 und 8 verbunden, die im abgeklappten Zustand die obere Befüllöffnung 3 verschließen. (Siehe linke Seite der Fig. 3). In den meisten aller Fälle sind jedoch die einander zugewandten Deckelhälften auf die mit den Seitenwänden 4 verbundenen aufgeklappt. Wie insbesondere aus Fig. 3 hervorgeht, sind die äußeren Hälften der Deckel 7 und 8 über Hebel 9 und 10 gelenkig mit den Blechen 11 und 12 verbunden. Diese Bleche 11 und 12 sind im Bereich der Stirnwände 13 und 14 des Korntanks 2 angeordnet. Sie sind in als U-Schienen 15 und 16 ausgebildete Geradführungen auf- und abbewegbar gehalten, wobei die U-Schienen 15 und 16 über Winkeleisenprofile 17 und 18 mit den Stirnwänden 13 und 14 festverbunden sind. Wie aus der Fig. 4 zu erkennen ist, ist der Abstand des Bleches 11 zur vorderen Stirnwand 13 größer als der Abstand des Bleches 12 zur hinteren Stirnwand 14. Dieser größere Abstand ist erforderlich, um in dem durch die Stirnwand 13, dem Blech 11 und den Winkelprofilen 17 gebildeten Schacht 19 ein Kraftmittel zum auf- und abbewegen der Bleche 11 und 12 anzuordnen. Dieses Kraftmittel ist im Falle des Ausführungsbeispiels als hydraulische Kolbenzylindereinheit 20 ausgebildet. Der Zylinder 21 dieser Kolbenzylindereinheit 20 ist über Halter 22 mit der vorderen Stirnwand 13 festverbunden. Die Kolbenstange 23 dieser Kolbenzylindereinheit weist ein Kopfstück 24 auf, mit dem vier Seile 25 bis 28 einendig verbunden sind. Die Seile 26 und 28 sind über Umlenkrollen 29 und 30 sowie 31 geführt und greifen an Laschen 32 an, die mit dem unteren Bereich des Bleches 11 festverschweißt sind. Die genannten Umlenkrollen sind freidrehbar mit der vorderen Stirnwand 13 des Korntanks 2 verbunden. Die beiden anderen Seile 25 und 27 sind über weitere Umlenkrollen 33, 34 und 35 zu den Laschen 36 geführt und dort mit diesen verbunden, wobei diese Laschen 36 fest mit dem unteren Bereich des hinteren Bleches 12 verschweißt sind. Wie aus der Fig. 2 und der rechten Hälfte der Fig. 3 hervorgeht, ruhen die Deckel 7 und 8 in aufgeklappter Stellung auf den dachförmig schräg verlaufenden Kanten der hochgefahrenen Bleche 11 und 12 auf, so daß hierdurch ein ringsum geschlossener Kastenaufbau erzielt wird, durch den das Volumen des Korntanks 2 erheblich vergrößert ist. Zur Bildung eines solchen kastenförmigen Aufsatzes ist es nunmehr erforderlich, die Kolbenzylindereinheit 20 zu betätigen, d. h. die Kolbenstange 23 einzufahren. Mit dieser Einfahrbewegung werden die in der linken Hälfte der Fig. 3 in abgesenkter Stellung dargestellten Bleche 11,12 gegen die Kraft von Zugfedern 36, die mit ihren Enden am Tankboden und an den Blechwänden 11 und 12 eingehängt sind, durch die Seile nach oben gezogen, wobei gleichzeitig mit dieser Bewegung über die Hebel 9 und 10 die Deckel 7 und 8 aufgestellt werden, bis die in Fig. 2 dargestellte Lage erreicht ist. Um die Deckel 7 und 8 wieder einschwenken zu können, ist es lediglich erforderlich, die Kolbenstange 23 der Kolbenzylindereinheit 22 einzufahren, wodurch die Deckel 7 und 8 durch ihr Eigengewicht nach innen klappen und gleichzeitig die Bleche 11 und 12 mit Unterstützung durch die Zugfedern 36 in ihren Führungen 15 und 16 nach unten gleiten.

### Bezugszeichenaufstellung:

- 1: - Selbstfahrender Mähdrescher
- 2: - Korntank
- 3: - Befüllöffnung
- 4: - Seitenwände
- 5: - Scharniere
- 6: - Scharniere
- 7: - Deckel
- 8: - Deckel
- 9: - Hebel
- 10: - Hebel
- 11: - Bleche
- 12: - Bleche
- 13: - Stirnwände
- 14: - Stirnwände
- 15: - U-Schienen
- 16: - U-Schienen
- 17: - Winkeleisenprofile
- 18: - Winkeleisenprofile
- 19: - Schacht
- 20: - Kolbenzylindereinheit
- 21: - Zylinder
- 22: - Halter
- 23: - Kolbenstange
- 24: - Kopfstück
- 25: - Seile
- 26: - Seile
- 27: - Seile
- 28: - Seile
- 29: - Umlenkrolle
- 30: - Umlenkrolle
- 31: - Umlenkrolle
- 32: - Laschen
- 33: - Umlenkrollen
- 34: - Umlenkrollen
- 35: - Umlenkrollen
- 36: - Zugfedern

## Patentansprüche

1. Mähdrescherkorntank mit Stirnwänden, Seitenwänden und einer oberen Befüllöffnung, die zumindest bereichsweise durch mit jeder Seitenwand klappbar verbundene Deckel verschließbar ist, wobei diesen beiden Deckeln mit den Korntankstirnwänden verbundene höhenverlagerbare Bleche derart zugeordnet sind, daß die Deckel in hochgeklappter Stellung gemeinsam mit den hochgestellten Blechen einen kastenförmigen Aufsatz zwecks Korntankvergrößerung bilden,
**dadurch gekennzeichnet,**
daß die Bleche (11, 12) in an der Innenseite der Korntankstirnwände (13,14) befestigte Geradeführungen (15,16) über ein Kraftmittel (20) auf und ab verschiebbar geführt sind und daß die mit den Seitenwänden (4) klappbar verbundenen Deckel (7 und 8) von den Blechen (11,12) verschwenkt werden.

2. Mähdrescher nach Anspruch 1,
**dadurch gekennzeichnet,**
daß die Bleche (11 und 12) über Hebel (9 und 10) mit den Deckeln (7 und 8) gelenkig verbunden sind.

3. Mähdrescher nach den Ansprüchen 1 und 2,
**dadurch gekennzeichnet,**
daß das Kraftmittel (20) eine Kolbenzylindereinheit ist.

4. Mähdrescher nach den Ansprüchen 1 bis 3,
**dadurch gekennzeichnet,**
daß das Kraftmittel (20) über Seilzüge (25 bis 28) mit den Blechen (11 und 12) verbunden ist.

5. Mähdrescher nach den Ansprüchen 1 bis 4,
**dadurch gekennzeichnet,**
daß mit der Kolbenstange (23) der Kolbenzylindereinheit (20) die Enden von vier Seilen (25 bis 28) befestigt sind, die paarweise an den Blechen (11,12) angreifen.

6. Mähdrescher nach den Ansprüchen 1 bis 5,
**dadurch gekennzeichnet,**
daß die Seile (25 bis 28) über Umlenkrollen (29,30,33,34,35) geführt sind.

7. Mähdrescher nach den Ansprüchen 1 bis 6,
**dadurch gekennzeichnet,**
daß die Seile (25 bis 28) einendig an mit den Blechen (11,12) verbundenen Laschen (32,36) befestigt sind, wobei letztere unterhalb der ihnen benachbarten Umlenkrollen (30,31 bzw. 34, 35) angeordnet sind.

8. Mähdrescher nach den Ansprüchen 1 bis 7,
**dadurch gekennzeichnet,**
daß das Kraftmittel (20) in dem durch eine Korntankstirnwand (13) und ein Bleche (11) gebildeten Schacht (19) gelagert ist.

9. Mähdrescher nach den Ansprüchen 1 bis 8,
**dadurch gekennzeichnet,**
daß der Schacht (19) umfangsseitig außer durch Bleche (11) und die Korntankstirnwand (19) durch die die Geradführungen (15) für das Blech (11) mit der Stirnwand (13) verbindenden Profile (17) begrenzt ist.

## Claims

1. A combine harvester grain tank having end walls, side walls and an upper filling opening which is closable at least in a region-wise manner by covers which are hingedly connected to each side wall, wherein plates which are displaceable in respect of height and which are connected to the grain tank end walls are associated with those two covers in such a way that in the upwardly pivoted position, jointly with the raised plates, the covers form a box-like upward extension arrangement for the purposes of increasing the size of the grain tank, characterised in that the plates (11, 12) are guided displaceably up and down by way of a power means (20) in straight guides (15, 16) which are secured to the inside of the grain tank end walls (13, 14) and that the covers (7 and 8) which are hingedly connected to the side walls (4) are pivoted by the plates (11, 12).

2. A combine harvester according to claim 1 characterised in that the plates (11 and 12) are pivotably connected to the covers (7 and 8) by way of levers (9 and 10).

3. A combine harvester according to claims 1 and 2 characterised in that the power means (20) is a piston-cylinder unit.

4. A combine harvester according to claims 1 to 3 characterised in that the power means (20) is connected to the plates (11 and 12) by way of cable arrangements (25 to 28).

5. A combine harvester according to claims 1 to 4 characterised in that the ends of four cables (25 to 28) which engage the plates (11, 12) in pairs are fixed to the piston rod (23) of the piston-cylinder unit (20).

6. A combine harvester according to claims 1 to 5 characterised in that the cables (25 to 28) are guided over direction-changing rollers (29, 30, 33, 34, 35).

7. A combine harvester according to claims 1 to 6 characterised in that the cables (25 to 28) are fixed at one end to bars (32, 36) connected to the plates (11, 12), wherein the bars are arranged beneath the direction-changing rollers (30, 31 and 34, 35 respectively) adjacent thereto.

8. A combine harvester according to claims 1 to 7 characterised in that the power means (20) is mounted in the shaft compartment (19) formed by a grain tank end wall (13) and a plate (11).

9. A combine harvester according to claims 1 to 8 characterised in that the shaft compartment (19) is defined at its periphery, besides by plates (11) and the grain tank end wall (13), by the profile members (17) which connect the straight guides (15) for the plate (11) to the end wall (13).

## Revendications

1. Trémie à grain de moissonneuse-batteuse comportant des parois frontales, des parois latérales et une ouverture supérieure de remplissage qui peut être fermée partiellement au moins par des couvercles qui sont liés à chacune des parois latérales de manière à pouvoir être repliés, des tôles mobiles en hauteur, liées aux parois frontales, étant associées aux couvercles de la trémie de manière telle que les couvercles en position dressée forment avec les tôles amenées en position haute une rehausse en forme de caisson aux fins d'augmenter la capacité de la trémie à grain, caractérisée par le fait que les tôles (11,12) sont guidées avec possibilité de déplacement vers le haut et vers le bas par un moyen moteur (20) dans des glissières (15, 16) rectilignes fixées sur la face intérieure des parois frontales (13, 14) de la trémie et par le fait que le pivotement des couvercles (7 et 8) reliés aux parois latérales (4) de manière à pouvoir être repliés est provoqué par les tôles (11, 12).

2. Moissonneuse-batteuse selon la revendication 1, caractérisée par le fait que les tôles (11 et 12) sont reliées de manière articulée aux couvercles (7 et 8) par l'intermédiaire de leviers (9 et 10).

3. Moissonneuse-batteuse selon les revendications 1 et 2, caractérisée par le fait que le moyen moteur (20) est un ensemble piston-cylindre.

4. Moissonneuse-batteuse selon les revendications 1 à 3, caractérisée par le fait que le moyen moteur (20) est relié aux tôles (11 et 12) par l'intermédiaire de commandes à câbles (25 à 28).

5. Moissonneuse-batteuse selon les revendications 1 à 4, caractérisée par le fait que les extrémités de quatre câbles (25 à 28) qui agissent par deux à deux sur les tôles (11, 12) sont fixées à la tige de piston (23) de l'ensemble piston-cylindre (20).

6. Moissonneuse-batteuse selon les revendications 1 à 5, caractérisée par le fait que les câbles (25 à 28) sont guidés par l'intermédiaire de poulies de renvoi (29, 30, 33, 34, 35).

7. Moissonneuse-batteuse selon les revendications 1 à 6, caractérisée par le fait que les câbles (25 à 28) sont fixés à une extrémité à des pattes (32, 36) qui sont liées aux tôles (11, 12), lesdites pattes étant disposées en-dessous des poulies de renvoi (30, 31 et 34, 35) voisines correspondantes.

8. Moissonneuse-batteuse selon les revendications 1 à 7, caractérisée par le fait que le moyen moteur (20) est monté dans le puits (19) formé par une paroi frontale (13) de la trémie et par une tôle (11).

9. Moissonneuse-batteuse selon les revendications 1 à 8, caractérisée par le fait que le puits (19) est fermé sur son pourtour, en plus des tôles (11) et de la paroi frontales (19) de trémie, par les profilés (17) qui relient les glissières (15) rectilignes pour la tôle (11) à la paroi frontale (13).
